# EUROPEAN PATENT APPLICATION

(11) **EP 4 761 375 A1**
(43) Date of publication of application: **17.06.2026**
(21) Application number: 24852252.6
(22) Date of filing: 05.08.2024
(51) Int. Cl.: H04W 52/02, H04L 27/26, H04L 27/02

(54) **METHOD AND APPARATUS FOR TRANSMITTING AND RECEIVING SIGNAL IN WIRELESS COMMUNICATION SYSTEM**

(30) Priority: 10.08.2023 US 202363532028 P; 19.02.2024 KR 20240023320; 09.05.2024 KR 20240061517
(71) Applicant: LG Electronics Inc., Yeongdeungpo-gu Seoul 07336 (KR)
(72) Inventor: CHOI, Seunghwan, Seoul 06772 (KR); YANG, Suckchel, Seoul 06772 (KR); KIM, Jaehyung, Seoul 06772 (KR); KIM, Seonwook, Seoul 06772 (KR)
(74) Representative: Mooser, Sebastian Thomas
(86) International application number: PCT/KR2024/011497
(87) International publication number: WO 2025/033898

(57) **Abstract**

A method and an apparatus for transmitting and receiving a signal in a wireless communication system disclosed in the present specification may receive a signal through a first receiver, and identify a CP position in the received signal. The length of a segment including L samples corresponding to 1-bit information of the signal is determined on the basis of the position of the CP.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

In an aspect of the present disclosure, a method for transmitting and receiving a signal by a user equipment (UE) in a wireless communication system is provided, including receiving a signal through a first receiver of the UE and identifying a position of a cyclic prefix (CP) of the signal. A length of a segment including L samples corresponding to 1-bit information of the signal is determined based on the position of the CP.

In another aspect of the present disclosure, there are provided a UE, a processor, and a storage medium as an apparatus for performing the signal transmission and reception method.

The apparatus may include an autonomous driving vehicle communicable with at least a UE, a network, and another autonomous driving vehicle other than the apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 14 are diagrams illustrating methods for transmitting and receiving a signal according to the embodiments of the present disclosure.
FIGS. 14 to 16 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR
- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

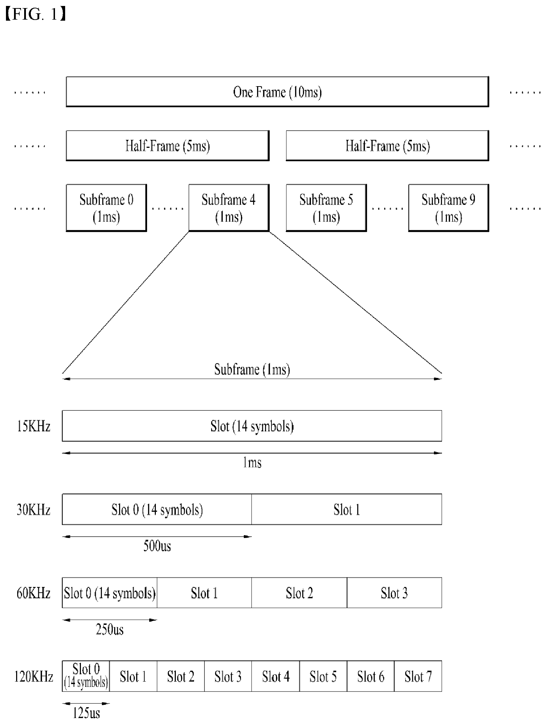

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ number of slots in a frame * N^{subframe,u}ₛₗₒₜ number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

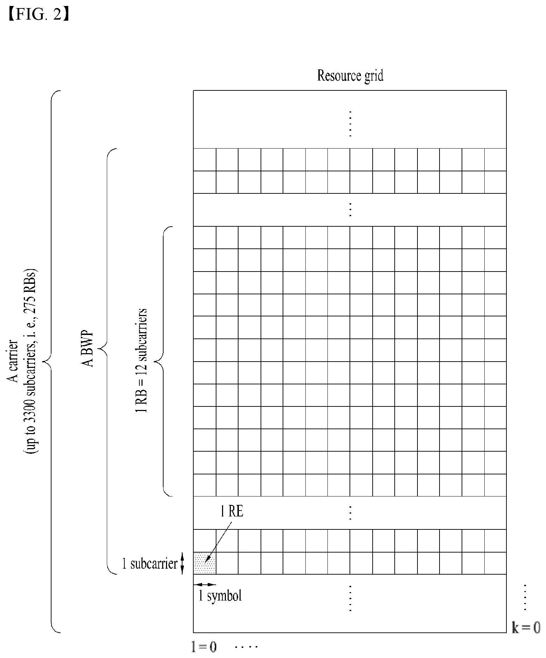

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace me {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

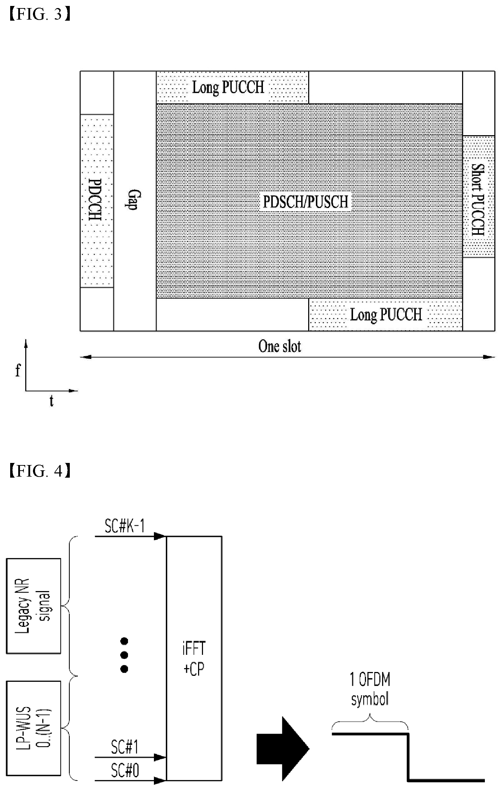

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### LP-WUS (Low Power Wake-Up Signal)

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

In the Rel-18 NR standard, discussions are ongoing to introduce a low-power wake-up signal (LP-WUS) and a separate receiver capable of receiving such a signal, known as a low-power wake-up receiver or low-power wake-up radio (LP-WUR), as a new power consumption reduction method, which is somewhat different from the power consumption reduction techniques for UEs introduced and supported in Rel-16/17. If a receiver in the UE (DL receiver) of the conventional NR system is referred to as a main radio/receiver (MR), the LP-WUR represents a separate receiver (i.e., companion radio/receiver) capable of being introduced to reduce the power consumption of the MR. The term LP-WUR may be simply referred to as LR.

Options for an LP-WUS waveform generation method will be described below. These may be understood as different methods for generating multi-carrier on-off keying (MC-OOK) and multi-carrier frequency shift keying (MC-FSK) waveforms.

FIGS. 4 to 7 illustrate options for an LP-WUS waveform generation method.

FIGS. 4 to 7 relate to multi-carrier amplitude shift keying (MC-ASK) waveform generation. In FIGS. 4 to 7, K is an inverse fast Fourier transform (iFFT) size for cyclic prefix-orthogonal frequency division multiplexing access (CP-OFDMA), and N is the number of subcarriers (SCs) used for an LP-WUS, including a potential guard band.

FIG. 4 illustrates Option OOK-1.

In Option OOK-1, one OFDM symbol includes a single bit. For the SCs of the LP-WUS, OOK=1 means that all SCs are modulated. OOK=0 means that all SCs have zero power (from a baseband perspective).

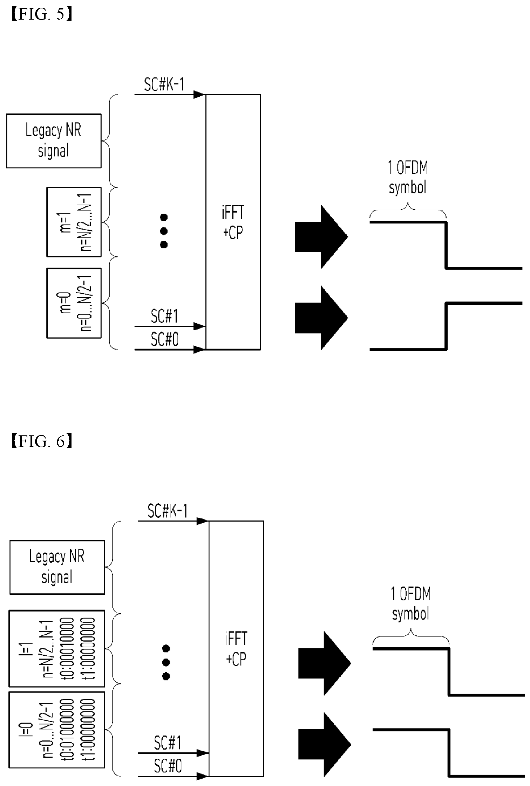

FIG. 5 illustrates Option OOK-2.

Referring to FIG. 5, in Option OOK-2, M bits of OOK are included in parallel in the frequency domain. The N SCs of the LP-WUS are divided into M segments. A guard band may be included between every two segments and/or around each segment. OOK=1 means that all SCs within a segment are modulated. OOK=0 means that all SCs within a segment have zero power (from a baseband perspective).

FIG. 6 illustrates Option OOK-3.

Referring to FIG. 6, Option OOK-3 corresponds to multi-tone single-bit OOK. The N SCs of the LP-WUS are divided into L segments. No guard band exists between segments, but a guard band may exist around a segment. OOK=1 means that one SC (recognized by the UE) of each segment is modulated, and the remaining SCs have zero power (from a baseband perspective). OOK=0 means that all SCs within the segment have zero power (from a baseband perspective).

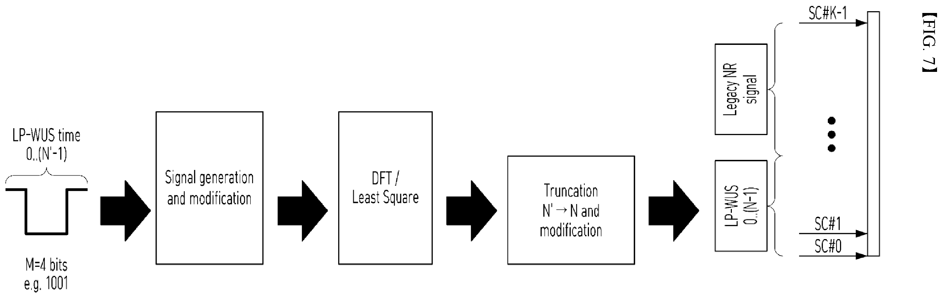

FIG. 7 illustrates Option OOK-4.

Referring to FIG. 7, in Option OOK-4, M-bit OOK in the time domain is transformed. The N SCs of OOK-1 are generated by a transform (DFT/least square). N' samples are generated from M bits. Signal modification may or may not be used. Truncation or other additional modifications may or may not be used. If they are not used, N and N' are the same. N' may not be equal to K.

In FIGS. 4 to 7, the modulated SCs may be, for example, quadrature amplitude modulation (QAM) symbols, sequences, or other signals.

SCs of a potential guard band have zero power (from a baseband perspective). Optionally, out of two additional segments, one may always be modulated and the other may always be transmitted with zero power (from a baseband perspective).

However, even if a specific option is used in FIGS. 4 to 7, the characteristics of the other options are not excluded. For example, even in Option OOK-1, a plurality of bits may be included in one OFDM symbol.

For generation of M-bit MC-FSK, the following options may be considered.

Option FSK-1: The N SCs of the LP-WUS are divided into M pairs of segments, and potential guard bands may be located between every two segments and around each segment. A segment includes one or a plurality of consecutive SCs. One segment of a pair of segments may be modulated, and the other segment may have zero power (from a baseband perspective).

Option FSK-2: The N SCs of the LP-WUS are divided into 2^{M} segments, and potential guard bands may be located between every two segments and around each segment. A segment includes one or a plurality of continuous SCs. One segment of a pair of segments may be modulated, and the other segment may have zero power (from a baseband perspective).

In both FSK options, M > 0 and N > 1.

In MC-ASK or MC-FSK waveform generation, the subcarrier spacing (SCS) of a CP-OFDM symbol used for LP-WUS generation may be the same as an SCS used for other NR transmissions of CP-OFDM symbols overlapping in the time domain. When the SCSs are different, FDM/TDM multiplexing between the LP-WUS and other NR transmissions, link performance, impact on legacy UEs (which do not support the LP-WUS), and impact on a gNB may be considered.

The options for the LP-WUS waveform generation method have been described above.

Methods for generating a waveform or signal structure likely to be used for an LP-WUS and methods for configuring it are proposed below. In addition, a method for monitoring an LP-WUS in an LP-WUR, a synchronization signal (hereinafter, referred to as an LP-SS) that may be transmitted for synchronization of the LP-WUR, and a method for operating the LP-WUS/WUR are proposed.

In the MC-OOK signal generation method in OOK-4, information bits to be transmitted through the LP-WUS are defined in the time domain and converted into a frequency-domain signal through a DFT (or least square) block, and the frequency-domain signal is used as an input to an IFFT block in consideration of a frequency area allocated to the LP-WUS. When M bits are transmitted per OFDM symbol, an IFFT output signal may be divided into M time-domain (TD) segments. One bit is transmitted per TD segment. Further, LP-WUS information may be transmitted across a plurality of OFDM symbols. For example, when a UE ID is transmitted through the LP-WUS, (for example) 48 bits may be required. There may be limitations in transmitting 48 bits in a single OFDM symbol. For example, when the LP-WUS information includes M*K bits, one LP-WUS transmission may be performed through K OFDM symbols, and M bits may be transmitted per OFDM symbol.

The LP-WUS may be multiplexed with an NR signal/channel (e.g., PDSCH) in the frequency domain. That is, a transmission signal may be generated from the frequency-multiplexed LP-WUS and NR signal/channel through a single IFFT. Alternatively, the LP-WUS and the NR signal/channel may be transmitted by adding time-domain waveforms generated through separate IFFTs. Accordingly, a method for using or not using a CP period in each OFDM symbol of an NR signal/channel for LP-WUS signal transmission may be possible depending on a waveform generation method.

The proposed methods of the present disclosure may correspond to methods for configuring a signal to map LP-WUS information bits (in the time domain) to an input of a DFT (or least square) block. Alternatively, they may correspond to operations of a 'signal generation and modification' block in a transmitter baseband block diagram of OOK-4 or methods for generating an input of the 'signal generation and modification' block.

A (transmitter and) receiver for an NR signal/channel is expressed as an MR, and an LP-WUS receiver is expressed as an LR or LP-WUR.

When waveforms such as the aforementioned OOK-1, OOK-2, OOK-3, OOK-4, FSK-1, and FSK-2 are configured, the proposed methods of the present disclosure may all be applied. For example, a method for defining a sequence for a segment in the time domain may be used to define a pre-DFT sequence of OOK-4. Alternatively, the same method may be used as a method for generating a time-domain signal of FSK-1 or FSK-2.

The proposed methods of the present disclosure may be methods for generating the waveform of an LP- WUS and/or methods for generating the waveform of an LP-SS (i.e., a separate synchronization signal for an LP-WUR). Although the following description is given in the context of the LP-WUS for convenience, a method for generating the LP-WUS may also be used to generate the LP-SS.

When M bits are transmitted in each OFDM symbol of the MR, each bit may be mapped to samples (or a bitstream) of length L. L samples for an n^{th} bit are expressed as B(n)={b(n,1), ..., b(n,L)}. Herein, n=1,..., M. Further, in OOK-4, since the OFDM symbol of the MR may be divided into different time periods by {B(1),...,B(M)}, each B(n) may be expressed as a segment (in the time domain).

If Manchester encoding (or repetition or another type of channel coding or input encoding) is used for OOK-4, one bit may be transmitted through a plurality of segments. For example, when 0.5 rate Manchester encoding is used, one bit may be transmitted through two consecutive segments. In this case, one segment may have non-zero power and the other segment may have zero power. In the present disclosure (for convenience of description), various methods are proposed without considering such encoding unless otherwise specified. However, when such encoding is applied, the proposed methods of the present disclosure may be equally applied by only changing the number of segments per bit.

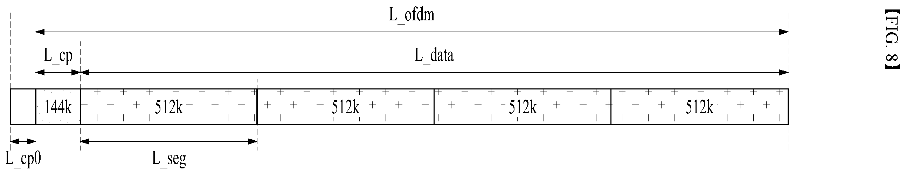

The relationship illustrated in FIG. 8 may be established among the length L_ofdm or L_data of an OFDM symbol of the MR, the length L_cp of a CP inserted before each OFDM symbol, a long CP length L_cp0 additionally inserted into an OFDM symbol every 0.5ms, and the length L_seg of a segment (for each bit).

FIG. 8 is based on the assumption of a 15-kHz SCS and L_data of 2048κ. That is, L_cp (=144κ), L_seg (=512κ), and L_data (=2048κ) may have different values depending on the SCS and/or channel bandwidth (BW) or IFFT size of an MR OFDM symbol. L_cp0 (=16κ) represents the length of an additional CP added only to the first OFDM symbol of every 0.5-ms period. κ may be 64, which is the ratio between Ts and Tc defined in the 38.211 specification. L_seg may correspond to a length obtained by dividing L_data by M. However, according to the proposed methods described later, L_seg may refer to different lengths, for example, it may be defined as a length obtained by dividing L_ofdm by M or as a value obtained by dividing (L_cp0+L_ofdm) by M.
[1] Method of mapping LP-WUS data to period excluding CP period in MR OFDM symbol

### - Method 1-1

L_seg is determined as a value obtained by dividing L_data by M.

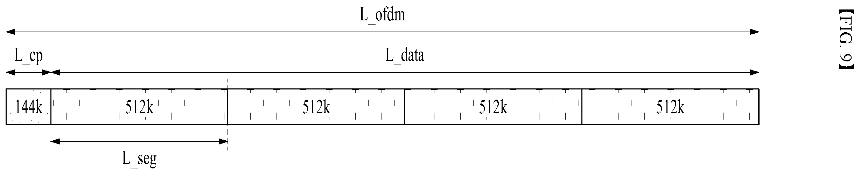

Referring to FIG. 9, each segment may include L_data/M samples. A BS transmitter may apply DFT to M segments, multiplex them with a data symbol (e.g., QAM) of an NR signal/channel, and perform a single IFFT to generate a transmission signal. The transmitter may cut an L_cp period from an end part of the last segment, add it to the beginning of the IFFT output signal, and the LR may perform a process of removing the CP before envelope detection (ED).

The LR may detect each bit of the LP-WUS by performing ED in units of a time period corresponding to each segment of the received time-domain signal. Alternatively, ED for the first segment may be performed for an (L_cp+L_seg) period. In this case, the LR may not need to detect and remove the CP period.

### - Method 1-2

L_seg is determined as a value obtained by dividing (L_data-L_cp) by M.

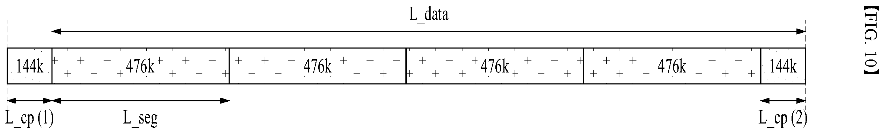

Referring to FIG. 10, each segment may include (L_data-L_cp)/M samples. The transmitter may apply DFT to an L_data period including M segments and a second L_cp (i.e., L_cp(2)), multiplex it with the NR signal/channel, and perform a single IFFT to generate a transmission signal. Alternatively, a separate IFFT from that of the NR signal/channel may be used for the LP-WUS. In this case, L_cp(2) may be filled with zeros or a known sequence. Alternatively, samples identical to the first (or last) L_cp of the last segment in L_data may be filled in L_cp(2).

The transmitter may cut the last L_cp period of L_data, add it to the beginning of the IFFT output signal, and the LR may perform a process of removing the CP before ED.

The LR may detect each bit of the LP-WUS by performing ED in units of a time period corresponding to each segment of the received time-domain signal. Alternatively, ED for the first segment and/or the last segment may be performed for an (L_cp +L_seg) period. In this case, the LR may not need to detect and remove a period corresponding to L_cp.

### - Method 1-3

L_seg is determined as a value obtained by dividing (L_data-L_cp) by M.

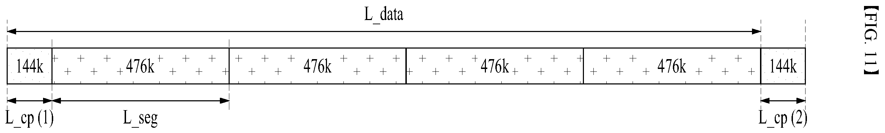

Referring to FIG. 11, each segment may include (L_data-L_cp)/M samples. The transmitter may apply DFT to an L_data period including M segments and a first L_cp (i.e., L_cp(1)), and then add a signal generated through a separate IFFT to the NR signal/channel to generate a transmission signal. In this case, the transmitter may cut a period corresponding to the first L_cp period of L_data in the IFFT output for the LP-WUS and add it to the end of the IFFT output signal. L_cp(1) may be filled with zeros or a known sequence. Alternatively, samples identical to the first (or last) L_cp of the first segment of L_data may be filled.

The LR may perform a process of removing the CP before ED. The LR may detect each bit of the LP-WUS by performing ED in units of a time period corresponding to each segment of the received time-domain signal. Alternatively, ED for the first segment and/or the last segment may be performed for an (L_cp+L_seg) period. In this case, the LR may not need to detect and remove a period corresponding to L_cp.

### [2] Method of mapping LP-WUS data to period including CP period in MR OFDM symbol

### - Method 2-1

L_seg is determined as a value obtained by dividing L_ofdm by M.

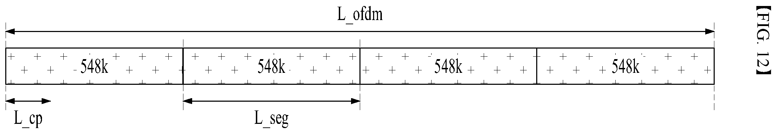

Referring to FIG. 12, each segment may include L_ofdm/M samples. The transmitter may apply DFT to M segments and an L_ofdm period, multiplex it with the NR signal/channel, and perform a single IFFT to generate a transmission signal. Alternatively, a separate IFFT from that of the NR signal/channel may be used for the LP-WUS.

The LR may detect each bit of the LP-WUS by performing ED in units of a time period corresponding to each segment of the received time-domain signal.

### - Method 2-2:

L_seg is determined as a value obtained by dividing L_ofdm by M.

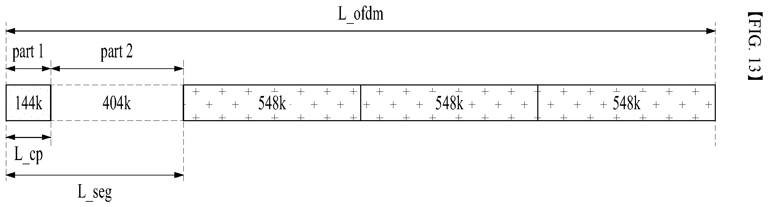

Referring to FIG. 13, each segment may include L_ofdm/M samples. The transmitter may apply DFT to the period of M-1 segments (i.e., L_ofdm-L_cp) excluding the first segment, multiplex it with the NR signal/channel, and perform a single IFFT to generate a transmission signal. Alternatively, a separate IFFT from that of the NR signal/channel may be used for the LP-WUS. When the NR signal/channel and the LP-WUS are multiplexed, a period corresponding to part2 in FIG. 13 may be filled with zeros. The transmitter may cut the last N_cp period of the multiplexed signal and attach it to the beginning (i.e., a portion corresponding to part1 in FIG. 13) of the IFFT output, for transmission.

The LR may detect LP-WUS transmission bits by performing ED on a segment basis for the M-1 segments. Alternatively, the first segment may be configured to transmit LP-WUS data during Part2 of FIG. 13, using a value larger than the SCS of the MR. For example, when the SCS of the MR is 15kHz, it may be configured that DFT and IFFT are calculated with a 30-kHz SCS for the first segment and with a 15-kHz SCS for the other segments. In this case, different ED application periods may be configured for a period corresponding to the first segment and a period corresponding to the other segments in the LR.

### - Method 2-3

A method in which L_seg is set similarly to 'Method 2-2', but non-zero power data is included in the first segment.

Referring to FIG. 13, L_seg may include L_ofdm/M samples. The transmitter may apply DFT to a period obtained by combining the part2 period of the first segment and the remaining M-1 segments, multiplex it with the NR signal/channel, and perform a single IFFT to generate a transmission signal.

Alternatively, a separate IFFT from that of the NR signal/channel may be used for the LP-WUS. Herein, part2 in FIG. 13 may be filled with zeros. In this case, the LR may detect LP-WUS transmission bits by performing ED on a segment basis for the M-1 segments.

Alternatively, part2 of FIG. 13 may be filled with a known sequence. In this case, the LR may detect LP-WUS transmission bits by performing ED on a segment basis for the M-1 segments, and use a portion corresponding to part2 for time/frequency synchronization or radio resource management (RRM) measurement.

Alternatively, part2 of FIG. 13 may be filled with samples (or a sequence) corresponding to a transmission bit of the LP-WUS. In this case, although the OFDM symbol includes M segments, the first segment may be configured to have the length of part2 in FIG. 13, and each of the other segments may be configured to have a length of L_seg in FIG. 13. In this case, the LR may detect LP-WUS transmission bits by performing ED on a segment basis for the M segments. However, an ED period for the first segment may be a period excluding L_cp or a period including L_cp.

The transmitter may cut the last L_cp period of the last segment and add it to the beginning of the IFFT output signal, and the LR may perform a process of removing the CP before ED.

(When M is configurable,) one of Method 2-2 and Method 2-3 may be selectively applied according to an M value or a segment length. For example, when the M value is less than a specific value (or when the segment length is larger than a specific length), Method 2-3 may be applied, and in the opposite case, Method 2-2 may be applied. The specific value (or specific length) may be predefined, set by RRC or an SIB, or set/indicated by a separate signal (e.g., LP-SS). A single specific value may be defined/set regardless of the SCS of the MR, or a different value may be defined/set according to the SCS. Alternatively, when a ratio between the length of a segment overlapping with a CP and a CP length is equal to or greater than (or equal to or less than) a specific value, Method 2-3 may be applied, and in the opposite case, Method 2-2 may be applied.

Alternatively, the first segment may be configured to transmit LP-WUS data during Part2 of the drawing, using a value larger than the SCS of the MR. For example, when the SCS of the MR is 15kHz, it may be configured that DFT and IFFT are calculated with a 30-kHz SCS for the first segment and with a 15-kHz SCS for the other segments. In this case, different ED application periods may be set for a period corresponding to the first segment and a period corresponding to the other segments in the LR.

### [3] Method of mapping LP-WUS data in consideration of long CP added every 0.5ms

### - Method 3-1

The length of a segment may be determined as a value obtained by dividing 0.5ms by X×M. M may be the number of bits transmitted in each OFDM symbol (or the number of segments forming each OFDM symbol), and X may be the number of OFDM symbols during 0.5ms.

The transmitter may configure a sequence corresponding to each bit on a segment basis, apply DFT, and map it to an input signal of the IFFT block. In this case, for example, the transmitter may configure a sequence/segment for each bit and map a DFT/IFFT input signal based on (or by applying) one of Methods 2-1/2/3 (the segment/CP length and configuration in the corresponding method).

The transmitter may use a separate IFFT block for the LP-WUS, and transmit an IFFT output signal of the LP-WUS by multiplexing it with an IFFT output signal of the NR signal/channel. A CP may be inserted into the IFFT output signal of the NR signal/channel, for each OFDM symbol (including a long CP at the beginning of a 0.5-ms period).

Alternatively, the transmitter may configure M segments by dividing a period excluding the first OFDM symbol including a long CP during 0.5ms by M.

The LR may detect bits of the LP-WUS by performing ED for a time period corresponding to each segment of the received signal (i.e., for example, a length obtained by dividing 0.5ms by X×M). In this case, for example, the transmitter may operate to map/transmit a total of X×M bits through the respective X×M segments, and the receiver may operate to receive/detect the X×M bits through the X×M segments. Alternatively, the LR may perform ED for each time period obtained by dividing the length of each OFDM symbol by M. Alternatively, the LR may perform ED only for the remaining segments except for a segment overlapping with the CP in each OFDM symbol (including the long CP at the beginning of the 0.5ms period) among the segments of the received signal. In this case, for example, the transmitter may map/transmit a total of X×(M-1) bits through X×(M-1) segments excluding the first segment of each OFDM symbol period among the X×M segments, and the receiver may operate to receive/detect the X×(M-1) bits through the X×(M-1) segments. Alternatively, the transmitter may map/transmit bits through the remaining segments except for a segment that (equivalently) overlaps with the CP period in each OFDM symbol by a specific level (e.g., half of the CP period) or more among the segments, and the receiver may operate to receive/detect the bits through the corresponding segments.

When the length of a segment generating the LP-WUS does not match an ED period in the LR, LP-WUS data may not be included in the first segment or the last segment of the 0.5-ms period, and the corresponding segment may be set to zero power. Alternatively, the LR may not detect LP-WUS data in the first ED period or the last ED period of the 0.5-ms period.

### - Method 3-2

A method of configuring a segment length for each OFDM symbol through one of the methods described in [1] or [2], while separately configuring only the segments of the first OFDM symbol in a 0.5-ms period. The first segment may be configured using one of the following methods.

### - Method 3-2-(1)

When the segments of OFDM symbols are configured according to Method 1-1, the first segment of the first OFDM symbol may also be configured identically to the remaining segments.

### - Method 3-2-(2)

When the segments of OFDM symbols are configured according to Method 1-2 or Method 1-3, a value obtained by adding a long CP length to L_cp may be applied instead of L_cp of Method 1-2 or 1-3.

### - Method 3-2-(3)

When the segments of OFDM symbols are configured according to Method 2-1, the first segment of the first OFDM symbol may be configured by a value obtained by adding a long CP length to L_ofdm/M. Alternatively, all M segments of the first OFDM symbol may be configured identically by a value obtained by dividing (L_ofdm + long CP length) by M.

### - Method 3-2-(4)

When the segments of OFDM symbols are configured according to Method 2-2 or Method 2-3, a value obtained by adding up to the long CP length of part1 of FIG. 2-2 may be applied for the first segment of the first OFDM symbol. Alternatively, M segments of the first OFDM symbol may be configured identically by a value obtained by dividing (L_ofdm + long CP length) by M.

Regarding the methods in section 3, before performing ED on a corresponding segment, the LR may remove a long CP and determine an ED period for each segment (using the remaining period), or determine an ED period for each segment by including the long CP period.

Regarding the methods in section 3, the LR may perform ED at intervals of a predetermined period regardless of a segment length in each OFDM symbol. For example, regardless of a segment length/position, the LR may perform ED starting from the starting point of a 0.5-ms period, in units of a length obtained by dividing 0.5ms by a specific value (e.g., "number of OFDM symbols within 0.5ms" * "number of segments per OFDM symbol").

### [4] Other additional proposal

The proposed methods may be selectively applied according to the RRC mode of the MR, when the LP-WUS operates. For example, in an RRC idle mode or an RRC inactive mode (since synchronization with an NR frame, slot, and symbol may be incomplete), segments may be configured and ED periods of the LR may be defined/configured using the methods of [2] or [3] above. In an RRC connected mode, segments may be configured and ED periods of the LR may be defined/configured using the methods of [1] above.

Different proposed methods may be selectively applied to an LP-WUS waveform and an LP-SS waveform. For example, Method 2-1 (or Method 3-2 using Method 2-1) may be applied to the LP-SS, and Method 2-2 (or Method 3-2 using Method 2-2) may be applied to the LP-WUS.

The UE may report some of the above methods as a UE capability. In addition, one of the above methods may be configured/indicated for/to the UE by RRC, an SIB, or a separate signal for the LP-WUS (e.g., a dedicated signal for synchronization of the LR).

In order to reduce inter-cell interference, only some of the M segments of an OFDM symbol (or OFDM symbols of 0.5ms or segments within 0.5ms) may be used for each cell.

For example, when there are 4 segments in an OFDM symbol (i.e., when M=4), for cell#A, a waveform may be generated and transmitted in MC-OOK or MC-FSK, for segments #0 and #1, while segments #2 and #3 may be filled with zero power. For cell#B, a waveform may be generated and transmitted in MC-OOK or MC-FSK, for segments #2 and #3, while segments #0 and #1 may be filled with zero power.

In another example, the LP-WUS may be transmitted in a different frequency/segments in each cell. When there are 8 segments available for the LP-WUS, only 2 segments may be allocated to each of cells #A, #B, #C, and #D. This method is not limited to OOK-4 and may be applied to any waveform including OOK-1, OOK-2, FSK-1, and FSK-2 described above.

In the above method, an OFDM symbol allocated to (or used for) each cell, segment positions/indexes in the time domain, or segment positions/indexes in the frequency domain may be determined by a function of a cell ID. For example, assuming that the number of cases (or the number of indexes) for segment positions is N, the segments allocated to each cell may be determined by 'cell ID mod N'. Alternatively, the OFDM symbol allocated to (or used for) each cell, the segment positions/indexes in the time domain, or the segment positions/indexes in the frequency domain may be indicated/configured by RRC, an SIB, or a separate signal (e.g., a separate signal transmitted to synchronize the LP-WUS).

When Manchester encoding is used, a non-zero power period and a zero power period may generally be configured in the same length. That is, when Manchester encoding is applied to two segments, the two segments have the same length. However, for cases where the length of the first segment is different from the length of the remaining segments in an OFDM symbol in Method 2-2, Method 2-3, or the methods described in [3], the lengths of two Manchester-encoded segments may be different from each other. That is, when data is transmitted in part2 in Method 2-2/2-3, for example, a segment having a length of 404κ and a segment having a length of 548κ (as illustrated in FIG. 2-2) may be Manchester-encoded.

In order to reduce interference between consecutive segments, a specific length of a starting part of each segment (in the time domain) may be set to zeroes or configured as a CP identical to an end part of each segment in the above methods.

The specific length may include zeroes spanning L_cp, which is the CP length of the MR.

Particularly, for the first segment of an OFDM symbol including a long CP which is repeated every 0.5ms, a period of a front L_cp (=144κ for a 15-kHz SCS or 72κ for a 30-kHz SCS) length may be configured as zeroes or a CP. Alternatively, a period of an L_cp+L_cp0 (=16κ for both a 15-kHz and a 30-kHz SCS) length may be configured as zeroes or a CP.

Alternatively, the specific length may be indicated/set by RRC, an SIB, or a separate signal (e.g., a separate signal transmitted to synchronize the LP-WUS).

[4-1] In order to apply the proposed time-domain or frequency-domain sequences, one or more of the following pieces of information may be transmitted/configured to/for the UE (by the BS).
- Number of LP-WUS bits or segments transmitted per OFDM symbol
- Sequence length, CS, and PS
   ▪Initial state and/or phase (for generating a specific sequence)
   ▪ Root index of ZC sequence
- Offset for each segment position, or offset + segment size
   ▪ Or offset for first segment of OFDM symbol + segment size
   ▪ In this case, the offset may mean the number of samples from the starting point of the CP of a corresponding OFDM symbol to a corresponding segment, or the number of samples from the starting point of a long CP of a 0.5-ms duration to the corresponding segment. Alternatively, when there is an invalid period during a CP period or a specific period including the CP, the offset may mean the number of samples to the next valid segment.
- Length of OOK/FSK symbol, number of OOK/FSK symbols (included in OFDM symbol)
- Length/number of TD segments (or segment groups or sub-segments) (included in OFDM symbol)
- DFT-related information (e.g., DFT size) of OOK-4
   ▪Mapping information between DFT output and IFFT input when the DFT size is different from the number of SCs for LP-WUS

[4-2] Configuration values (including information in [4-1]) for applying the proposed time-domain or frequency-domain sequences may be transmitted/configured to/for the UE (by the BS).
- Configuration through RRC or SIB
- Indication/configuration through dedicated sync signal for LP-WUS
- When a preamble exists before LP-WUS data, indication/configuration through this preamble
- Indication/configuration through dedicated signaling (such as SDT for inactive mode)
- Method for determining configuration value for LP-WUS through specific equation
   ▪ The above information may be determined as a function of a cell ID
   ▪ The above information may be determined as a function of an SFN
   ▪ The above information may be determined as a function of a (sub)frame or slot or symbol index
   ▪ The above information may be determined as a function of the SCS of the MR
- Method for transmitting CP position for OFDM-based LP-WUR (w/o FFT)
   ▪ The BS may transmit the LP-WUS/LP-SS using a different CS or PSC value for each OFDM symbol (i.e., the CP/PS value is determined by a modulo operation on an OFDM index with a specific value). The UE (LP-WUR) may detect an OFDM symbol index by detecting this CS/PS value. The CS and PS values for each OFDM symbol index may be predefined or set by RRC or an SIB.
   ▪ When a sequence used for an odd-indexed OFDM symbol is seq#1, bar{seq#1} may be used for an even-indexed OFDM symbol to identify the boundary between two consecutive OFDM symbols in the LP-WUR. bar{ } may represent a bit inversion process in which each element of a sequence is changed from '0' to '1' and from '1' to '0'.
   ▪ As a sequence in which different sequences are overlaid is used only during the ON-period of an OOK symbol including a CP, the UE (LP-WUR) may identify the OOK symbol including the CP among OOK symbols carrying the LP-WUS/LP-SS. The specific sequence used for the OOK symbol including the CP may be predefined or configured by RRC or an SIB. Even if the same sequence is used for all OOK symbols, a sequence to which a specific CS value is applied may be used for the OOK symbol including the CP. The specific CS value may also be predefined or set by RRC or an SIB. A specific sequence (e.g., seq#2) may be used for the OOK symbol including the CP, while bar{seq#2} may be used for the remaining OOK symbols.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

### A-IoT (Ambient Internet of Things)

A-IoT may refer to a new device type/segment that operates solely on harvested energy from a surrounding environment. For example, A-IoT may refer to a new class of IoT devices that are powered by various harvestable energy sources such as radio waves, light, motion, and thermal energy.

For instance, active signal generation and/or backscattering may be one of the communication technologies considered to achieve the low-power operation of A-IoT devices. For example, backscattering is a widely used technology in radio frequency identification (RFID), enabling a device to communicate with a network by reflecting incident waves after modulating them with information to be transmitted. In this case, the device may be powered by an incident RF signal or stored energy.

A-IoT devices may be classified into various types such as passive, semi-passive, and active, depending on their energy storage and transmission signal generation methods. A passive device does not have an energy storage device (e.g., capacitor) and may communicate based on backscattering communication technology. For example, a semi-passive device has an energy storage device and may communicate using backscattering communication technology with the assistance of the energy storage device. For example, an active device has an energy storage device and may communicate by actively generating a signal using an active RF component and stored energy. For example, the following three types of IoT devices may be considered in the present disclosure. For example, device A may be a device with no energy storage and no independent signal generation (e.g., a device supporting backscattering transmission). For example device B may be a device with energy storage but no independent signal generation (e.g., a device supporting backscattering transmission). In this case, the use of stored energy may include amplification of a reflected signal. For example, device C may be a device with energy storage and independent signal generation (e.g., a device having an active RF component for transmission).

For example, to support A-IoT devices in indoor and outdoor scenarios, the following basic topology may be considered. For example, the basic topology may include direct BS-A-IoT device connection, BS-intermediate node-A-IoT device connection, connection support by an auxiliary node, and/or UE-A-IoT device connection. The basic topology proposed in the present disclosure is exemplary, and the proposal of the present disclosure may be extended/applied to other topologies.

A-IoT device types may be divided into two categories as follows. For example, a type-1 device may have a maximum power consumption of approximately 1uW, be capable of energy storage, not have an amplification function, and perform transmission by backscattering a carrier wave (CW) provided by an external source (e.g., a reader like a BS or a UE, or a separate node). For example, a type-2 device may have a maximum power consumption of approximately several hundred uW, be capable of energy storage, have an amplification function, and perform transmission by either backscattering a CW provided by an external source (e.g., a reader like a BS or a UE, or a separate node).

Besides the above classification, for example, A-IoT device types/classes may be divided based on parameters (e.g., presence/capacity of energy storage, level of energy/power consumption, presence/capability of amplification, presence/capability of a band-pass filter (BPF), supported DL/UL transmission scheme(s), and so on) related to device characteristics or their combinations. For example, the BPF capability may be distinguished by the 3-db BW of a supported BPF, sharpness, and so on, and the UL transmission schemes may be divided into, for example, backscattering UL transmission and UL transmission by internal signal generation.

Further, the A-Iot device types/classes may be sub-divided based on the parameters (e.g., presence/capacity of energy storage, level of energy/power consumption, presence/capability of amplification, presence/capability of a BPF, supported DL/UL transmission scheme(s), and so on) related to device characteristics or their combinations. For example, type-2 devices may be split into type 2a that performs transmission by backscattering a CW provided by an external source (e.g., a reader like a BS or a UE, or a separate node) and type 2b that performs transmission using an internally generated signal. Type 2a and type 2b may be identical in that they consume approximately several hundred uW, are capable of energy storage, and have an amplification capability.

An LP-WUS may be transmitted and received between A-IoT devices. Specifically, a waveform transmitted from a reader to an A-IoT device may correspond to a waveform proposed in the embodiments of the present disclosure. An A-IoT device may include only an LR without an MR. Therefore, upon receipt of an LP-WUS, the A-IoT device may perform an operation such as initial access or data transmission/reception through the LR, instead of an operation of triggering (or activating) the MR.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

### Implementation Examples

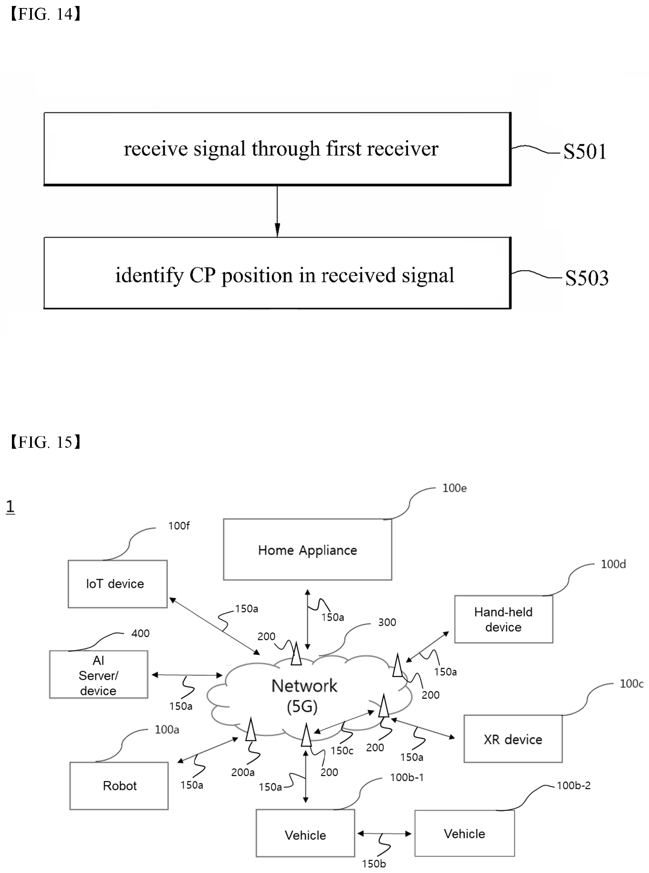

FIG. 14 is a flowchart of a signal transmission and reception method according to embodiments of the present disclosure.

Referring to FIG. 14, a signal transmission and reception method according to an embodiment of the present disclosure may be performed by a UE (or receiver) and include receiving a signal through a first receiver (S501) and identifying a CP position of the signal (S503).

The UE may perform a specific operation based on the reception of the signal. The specific operation may be an operation of triggering (or waking up) a second receiver by the UE. Alternatively, when the UE is an A-IoT device, the operation may be an operation of transmitting a corresponding signal based on the signal by the UE.

The signal may be the LP-WUS described in the present disclosure. Even if expressed by a different name, when the signal is for triggering an operation of the other receiver based on being received by a specific receiver, or is a signal received by an A-IoT device, it may correspond to the LP-WUS of the present disclosure.

The first receiver corresponds to a separate receiver (i.e., LP-WUR) for receiving the LP-WUS, and the second receiver corresponds to a main receiver (i.e., MR). While the specific names may be changed from LP-WUR and MR to others, the first receiver is designed to consume less power than the second receiver. The main receiver may be a receiver of a legacy NR system, and even if it is a receiver for a communication system other than the NR system, it corresponds to the main receiver as long as it is triggered based on signal reception of the other receiver that consumes less power.

However, in the case of an A-IoT device, it may include only the first receiver out of the first and second receivers.

Referring to sections [1] to [3], the length of a segment including L samples corresponding to 1-bit information of a signal is determined according to a CP position. A segment is a set or bitstream of L samples. One segment may be converted into one OOK symbol based on DFT, and one OOK symbol may represent 1-bit information.

Specifically, referring to section [1], the segment length is determined as a value obtained by equally dividing the length of an OFDM symbol excluding a CP length by the number of bits per OFDM symbol.

According to Method 1-1, the CP is located in a period having the CP length from the starting point of an OFDM symbol, and the segment length may be a value obtained by subtracting the length of the CP period from the OFDM symbol length and dividing the result by the number of bits per OFDM symbol.

According to Methods 1-2 and 1-3, CPs are located in a period having the CP length from the starting point of the OFDM symbol and in a period having the CP length from the end point of the OFDM symbol such that the CP ends at the end point of the OFDM symbol. The segment length may be a value obtained by subtracting the lengths of the two CP periods from the OFDM symbol length and dividing the result by the number of bits per OFDM symbol. One of the two CP periods may include a known sequence (or a predetermined sequence). Even if the UE does not have prior knowledge of an OFDM symbol boundary, it may identify by the sequence that a period including the sequence is a CP period.

Further, referring to section [2], the segment length is determined as a value obtained by equally dividing the length of the OFDM symbol, without excluding the CP length, by the number of bits per OFDM symbol.

According to Method 2-1, the CP is not included in the OFDM symbol, and the segment length may be a value obtained by dividing the length of the OFDM symbol by the number of bits per OFDM symbol.

According to Methods 2-2 and 2-3, the CP is located in a period corresponding to the CP length from the starting point of the OFDM symbol, and the segment length may be a value obtained by dividing the OFDM symbol length by the number of bits per OFDM symbol without subtracting the length of the CP period. Therefore, the starting segment within the OFDM symbol includes a CP period. In the segment including the CP period, a period excluding the CP period may be filled with zeros or a known sequence (or a predetermined sequence). The sequence is used for synchronization or RRM measurement.

Referring to section [3], the segment length may be determined considering a long CP located every 0.5ms. According to Method 3-1, the segment length may be determined as a value obtained by dividing 0.5ms by the product of the number of OFDM symbols included in 0.5ms and the number of bits per OFDM symbol. That is, the segment length may be determined as a value obtained by dividing 0.5ms by the total number of bits included in 0.5ms. According to Method 3-2, the starting segment located within a 0.5-ms period is configured considering the long CP, and the remaining segments may be configured through the methods of section [1] or section [2].

Information about the CP position may be transmitted to the UE through one or more of the operations in section [4].

Additionally, when the UE receives information about the CP position, the operation of section [1] are performed, in which the segment length is determined by considering the CP position based on the received information, and when the UE does not receive the information about the CP position, the operation of section [2] may be performed, in which the segment length is determined without considering the CP position.

Specifically, when the information about the CP position is received, the segment length may be determined as a value obtained by equally dividing the OFDM symbol length, excluding the CP length, by the number of bits per OFDM symbol. When the information about the CP position is not received, the segment length may be determined as a value obtained by equally dividing the OFDM symbol length, without excluding the CP length, by the number of bits per OFDM symbol.

Although not shown, the BS (or transmitter) may transmit a signal generated by considering the CP period of an OFDM symbol to the UE (or receiver). For a segment length for signal generation, reference may be made to sections [1] to [3]. Additionally, the BS (or transmitter) may apply a configuration or transmit information based on the operations of section [4].

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 15 illustrates a communication system 1 applied to the present disclosure.

Referring to FIG. 15, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

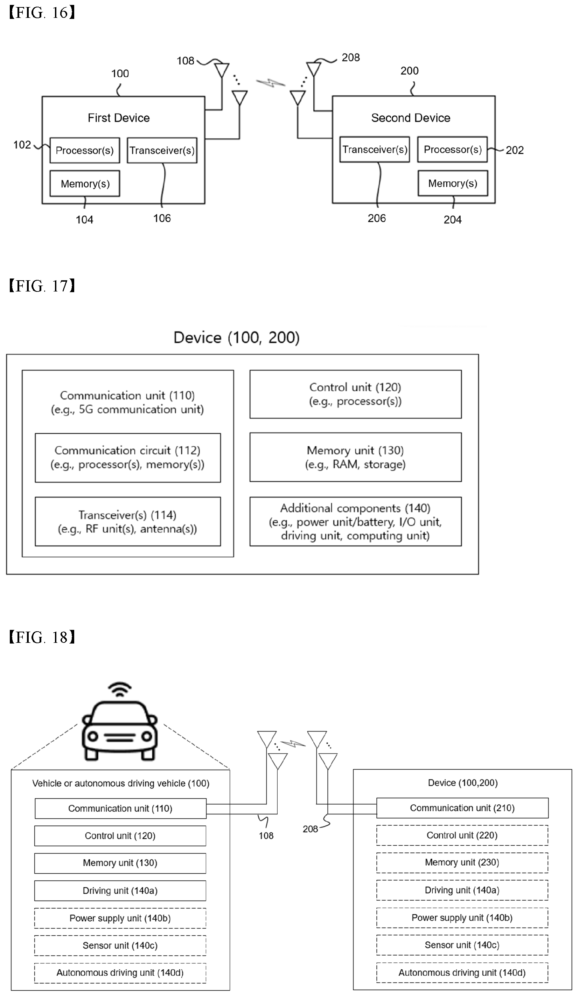

FIG. 16 illustrates wireless devices applicable to the present disclosure.

Referring to FIG. 16, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 17 illustrates another example of a wireless device applied to the present disclosure. The wireless device may be implemented in various forms according to a use case/service (refer to FIG. 15).

Referring to FIG. 17, wireless devices 100 and 200 may correspond to the wireless devices 100 and 200 of FIG. 16 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcasting terminal, a hologram device, a public safety device, an MTC device, a medical device, a FinTech device (or a finance device), a security device, a climate/environment device, the AI server/device (400 of FIG. 15), the BSs (200 of FIG. 15), a network node, or the like. The wireless device may be mobile or fixed according to a use case/service.

In FIG. 17, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 18 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method for transmitting and receiving a signal by a user equipment (UE) in a wireless communication system, the method comprising:
receiving a signal through a first receiver of the UE; and
identifying a position of a cyclic prefix (CP) of the signal,
wherein a length of a segment including L samples corresponding to 1-bit information of the signal is determined based on the position of the CP.

2. The method of claim 1, wherein the signal is a low power wake-up signal (LP-WUS).

3. The method of claim 1, further comprising triggering a second receiver of the UE based on the signal.

4. The method of claim 1, further comprising, based on the UE being an ambient Internet of things (A-IoT) device, transmitting a corresponding signal for the signal by the UE.

5. The method of claim 1, wherein the length of the segment is determined as a value obtained by equally dividing a length of an orthogonal frequency division multiplexing (OFDM) symbol excluding a length of the CP by a number of bits per OFDM symbol.

6. The method of claim 5, wherein the CP is located only in a period having the length of the CP from a starting point of the OFDM symbol within the OFDM symbol.

7. The method of claim 5, wherein the CP is located in a first period and a second period within the OFDM symbol,
wherein the first period is a period having the length of the CP from a starting point of the OFDM symbol, and
wherein the second period is a period having the length of the CP such that the CP ends at an end point of the OFDM symbol.

8. The method of claim 7, wherein one of the first period and the second period includes a predetermined sequence to indicate that the period is a CP period.

9. The method of claim 1, wherein the length of the segment is determined as a value obtained by equally dividing a length of an OFDM symbol from which a length of the CP is not excluded by a number of bits per OFDM symbol.

10. The method of claim 9, wherein the CP is not located within the OFDM symbol.

11. The method of claim 9, wherein the CP is located only in a period having the length of the CP from a starting point of the OFDM symbol within the OFDM symbol, and
wherein a starting segment within the OFDM symbol includes the period of the CP.

12. The method of claim 10, wherein values of bits in a period excluding the period of the CP are 0 in a starting segment within the OFDM symbol.

13. The method of claim 10, wherein a starting segment within the OFDM symbol includes a predetermined sequence in a period excluding the period of the CP.

14. The method of claim 1, wherein based on information about the position of the CP being obtained, the length of the segment is determined as a value obtained by equally dividing a length of an OFDM symbol excluding a length of the CP by a number of bits per OFDM symbol, and
wherein based on the information about the position of the CP not being obtained, the length of the segment is determined as a value obtained by equally dividing the length of the OFDM symbol from which the length of the CP is not excluded by the number of bits per OFDM symbol.

15. The method of claim 14, wherein the information about the position of the CP is obtained based on changing at least one of a cyclic shift (CS) value or a phase shift (PS) value for each OFDM symbol.

16. The method of claim 14, wherein the information about the position of the CP is obtained based on a bit-wise inversion sequence being used for segments in an even-indexed OFDM symbol and segments in an odd-indexed OFDM symbol.

17. The method of claim 14, wherein the information about the position of the CP is obtained based on a sequence different from a sequence of a segment corresponding to a period not including the CP being used only for a segment corresponding to a period including the CP.

18. A user equipment (UE) for transmitting and receiving a signal in a wireless communication system, the UE comprising:
at least one transceiver;
at least one processor; and
at least one memory operably connected to the at least one processor and storing instructions that, when executed, cause the at least one processor to perform specific operations,
wherein the specific operations include:
receiving a signal through a first receiver of the UE; and
identifying a position of a cyclic prefix (CP) of the signal, and
wherein a length of a segment including L samples corresponding to 1-bit information of the signal is determined based on the position of the CP.

19. An apparatus for a user equipment (UE), comprising:
at least one processor; and
at least one computer memory operably connected to the at least one processor and, when executed, causing the at least one processor to perform operations,
wherein the operations include:
receiving a signal through a first receiver of the UE; and
identifying a position of a cyclic prefix (CP) of the signal, and
wherein a length of a segment including L samples corresponding to 1-bit information of the signal is determined based on the position of the CP.

20. A non-transitory computer-readable storage medium including at least one computer program causing a user equipment (UE) including at least one processor to perform operations,
wherein the operations include:
receiving a signal through a first receiver of the UE; and
identifying a position of a cyclic prefix (CP) of the signal, and
wherein a length of a segment including L samples corresponding to 1-bit information of the signal is determined based on the position of the CP.
